# FASCICULE DE BREVET EUROPEEN

(11) **EP 2 310 924 B1**
(45) Date de publication et mention de la délivrance du brevet: **03.07.2013**
(21) Numéro de dépôt: 08835163.0
(22) Date de dépôt: 23.07.2008
(51) Int. Cl.: G05D 1/02

(54) **SYSTÈME DE TRANSPORT COLLECTIF AUTOMATISÉ**
AUTOMATISIERTES KOLLEKTIVES TRANSPORTSYSTEM
AUTOMATED COLLECTIVE TRANSPORT SYSTEM

(43) Date de publication de la demande: 20.04.2011
(73) Titulaire: Parienti, Raoul, 06000 Nice (FR)
(72) Inventeur: Parienti, Raoul, 06000 Nice (FR)
(86) Numéro de dépôt international: PCT/FR2008/001086
(87) Numéro de publication internationale: WO 2009/044003

(56) Documents cités:
- EP-A- 1 564 614
- DE-A1- 3 715 025
- FR-A- 2 707 755
- FR-A- 2 766 782
- US-A- 5 940 303
- US-A- 6 049 745
- US-A1- 2007 016 341

## Description

### Domaine technique

La présente invention concerne un système de transport urbain utilisant préférentiellement l'énergie électrique et destiné à transporter un ou plusieurs passagers d'un point d'une ville à un autre ou par extension d'une agglomération urbaine et concerne en particulier un système de transport collectif automatisé.

### Etat de la technique

A ce jour les moyens de transports urbains offerts au public consistent surtout en des moyens « gros porteurs » tels que bus, tramway, ou encore métro. Ces moyens capables de transporter un grand nombre de personnes suivant les grands axes stratégiques d'une ville présentent l'inconvénient de ne desservir qu'une partie de la ville et surtout n'offrent pas au public un environnement convivial.

D'autres moyens se sont développés, tels que les vélos ou de rares véhicules en libre service. Cependant, force est de constater qu'il n'existe pas à ce jour de moyen de transport urbain qui concerne l'ensemble de la population (enfants et personnes âgées, non voyants, personnes dépourvues de permis de conduire), capable de transporter ces personnes dans un environnement privatif d'un point à l'autre de la ville.

Cependant, le document EP 1.564.614 décrit un système de transport collectif comprenant un véhicule sans conducteur pouvant aller d'un point de départ à un point d'arrivée en suivant un rail intégré dans la chaussée au moyens de signaux électromagnétiques. Malheureusement, ce système manque de souplesse, ne permet pas l'utilisation de plusieurs véhicules et est inexploitable pour remplacer un réseau complet de transport en commun tel qu'un réseau de tramways dans la mesure où il ne dispose pas d'ordinateur central et ne comporte pas de moyens de repérage permettant au véhicule d'être localisé.

### Exposé de l'invention

C'est pourquoi, le but de l'invention est de fournir un système de transport collectif automatisé ne nécessitant pas l'infrastructure lourde mise en place dans un système de transport collectif tel qu'un réseau de tramways.

Un autre but de l'invention est de fournir un système de transport collectif automatisé pouvant comprendre une pluralité de véhicules automatisés formant un train de véhicules dans lequel chaque véhicule se dirige vers une destination commune ou différente.

Un autre but de l'invention est de fournir un système de transport collectif automatisé disposant de moyens de repérage destinés à la localisation permanente de chaque véhicule composant le système.

L'objet de l'invention est donc un système de transport collectif automatisé comprenant au moins un véhicule sans conducteur et un ordinateur central, ledit véhicule pouvant aller automatiquement d'un point de départ à un point d'arrivée au moyen de signaux de commande transmis par l'ordinateur central et en suivant un rail intégré à la chaussée sur laquelle se déplace le véhicule. Chaque véhicule est un véhicule automobile monté sur pneumatiques et le rail est une bande en caoutchouc ou équivalent fixée à la chaussée comportant une caractéristique optique continue et incorporant des dispositifs à puce sans contact de type RFID ou transpondeurs à intervalles réguliers. Chaque véhicule comprend des moyens de repérage et de détection comportant une antenne adaptée pour émettre des signaux radiofréquence vers les transpondeurs, ces moyens de repérage et de détection étant destinés à repérer la caractéristique optique permettant de suivre la bande pendant le déplacement du véhicule et à détecter des signaux de localisation reçus des transpondeurs en réponse aux signaux radiofréquence de manière à localiser le véhicule.

### Description brève des figures

Les buts, objets et caractéristiques de l'invention apparaîtront plus clairement à la lecture de la description qui suit faite en référence aux dessins dans lesquels :
la figure 1 représente un bloc diagramme du système de transport collectif selon l'invention;
la figure 2 représente schématiquement un véhicule utilisé dans le système selon l'invention et montrant les moyens du véhicule permettant son déplacement;
la figure 3 représente schématiquement la mise en oeuvre de la procédure de dégagement lorsqu'un véhicule est défaillant ;
la figure 4 représente schématiquement la mise en oeuvre de la procédure de contournement lorsqu'un véhicule est immobilisé ; et
la figure 5 est un schéma représentant un ensemble de véhicules du système selon l'invention en déplacement dans un milieu urbain.

### Description détaillée de l'invention

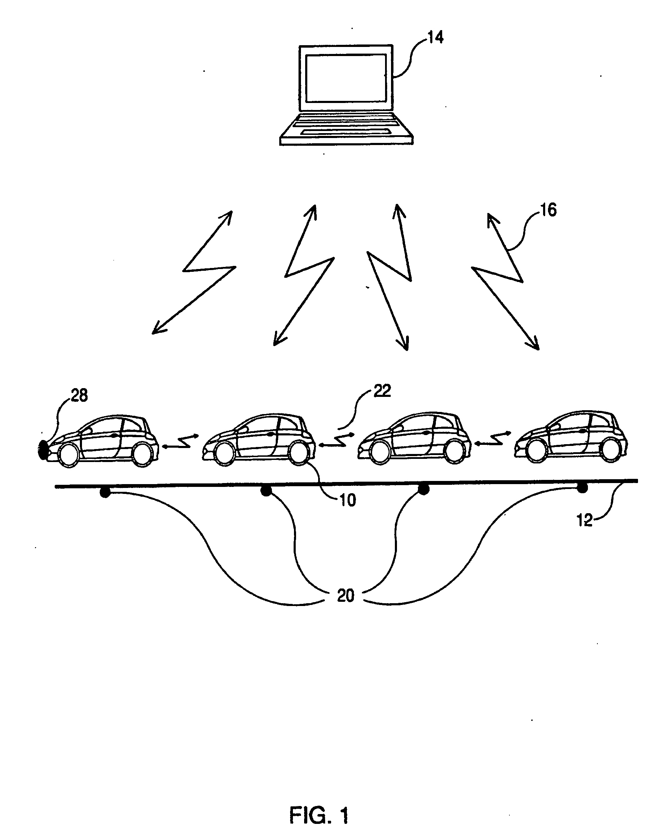

En référence à la figure 1, le système selon l'invention comprend un ou plusieurs véhicules 10 qui se déplacent le long d'un rail 12, à l'instar des tramways, mais contrairement à ces derniers qui nécessitent des coûts d'infrastructure très lourds, ce rail ou fil d'Ariane, est constitué d'une simple bande caoutchoutée collée sur la route comme une bande de signalisation routière présentant une caractéristique optique spécifique. Le coût d'installation du fil d'Ariane est très faible en comparaison avec un rail classique et le temps de mise en place est particulièrement rapide et sans nuisance.

Chaque véhicule comprend préférentiellement quatre places assises, disposées vis-à-vis ou dans le même sens comme dans une voiture classique par pivotement d'un demi tour de deux sièges. Le véhicule offre deux modes de fonctionnement : un mode automatique sans conducteur selon l'invention guidé par le fil d'Ariane, et si besoin un mode manuel (conduite classique).

Le modèle original des véhicules présente une symétrie avant arrière permettant un déplacement dans les deux sens. Les véhicules sont mus par un moteur électrique en mode automatique ou un moteur thermique en mode manuel. Dans ce dernier mode on utilisera préférentiellement le GPL (gaz de pétrole liquide) afin de minorer la pollution. A défaut, tout carburant classique peut être utilisé. A noter que l'utilisation en mode thermique permet la recharge des batteries nécessaires en mode automatique.

Chaque véhicule 10 est connecté à un ordinateur central 14 par liaison radiofréquence numérique 16. Lorsqu'un utilisateur monte à bord d'un véhicule, il indique selon les moyens décrits plus loin son point de destination. L'ordinateur central 14 connaît le point de départ et le point d'arrivée du véhicule et calcule alors le trajet optimum. Il détermine ainsi que le véhicule emprunte un premier rail jusqu'au point X, puis un second jusqu'au point Y etc., pour enfin atteindre sa destination. L'ensemble des noeuds de croisement des bandes ou fils d'Ariane 12 est parfaitement déterminé et mémorisé dans un ordinateur se trouvant dans le véhicule.

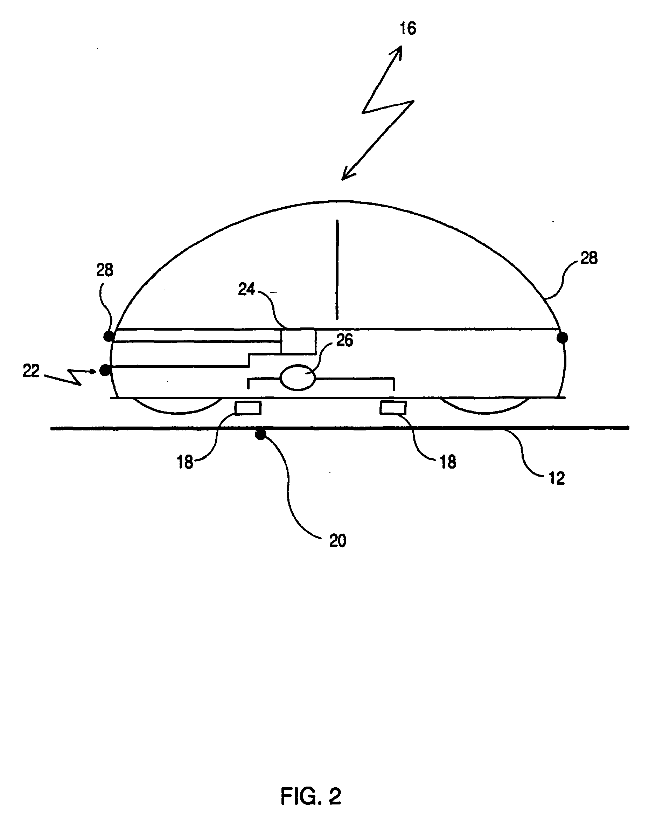

En référence à la figure 2, le véhicule évolue en suivant la bande caoutchoutée ou fil d'Ariane 12, car il dispose des moyens de repérage optique 18 lui permettant de suivre le fil d'Ariane dont la caractéristique optique est parfaitement définie. De plus, ce fil d'Ariane est pourvu d'un ensemble de dispositifs à puce sans contact 20 de type RFID ou transpondeurs mémorisant leurs localisations très précisément. Ces mémoires sont intégrées dans la bande de façon à les rendre indestructibles et fonctionnent de manière passive (sans alimentation). Ainsi, le véhicule est localisé de manière extrêmement précise. Afin de ne pas multiplier à l'infini le nombre de mémoires passives, on établit une corrélation odométrique entre la localisation précise des dispositifs et la distance parcourue par le nombre de tours de roues. La distance séparant deux dispositifs pourrait être par exemple de 50m.

Une caractéristique fondamentale de l'invention est que les véhicules sont conçus pour évoluer selon un mode de train virtuel. Pour ce faire, les véhicules communiquent entre eux selon plusieurs vecteurs de liaison sans fil hautement sécurisée et redondante 22. Typiquement, le système utilise préférentiellement trois vecteurs de communication, à savoir la liaison hyper fréquence numérique, la liaison radio analogique et la liaison par rayonnement infrarouge.

Chaque véhicule 10 est pourvu d'un ordinateur de bord 24 qui interprète les échanges de données selon les vecteurs de communication entre véhicules 22 et avec l'ordinateur central 14. Les données sont de deux sortes : les données liées à la conduite et les données liées à la gestion et à l'information qui constituent le système de référence.

Les données liées à la conduite utilisant plusieurs supports de communication sont redondantes, leur parfaite corrélation permettant d'assurer un fonctionnement parfaitement sécurisé. Les données liées à la conduite agissent directement sur un centre de commande 26 qui actionne quand nécessaire les freins, l'accélérateur ou la direction. Ces ordres de conduite sont orchestrés par l'ordinateur 24.

Comme mentionné précédemment, chaque véhicule 10 intègre un dispositif 18 de détection de la bande ou fil d'Ariane 12. Le fil d'Ariane en polymère ou caoutchouc aux propriétés optiques spécifiques, défile devant le détecteur 18, exactement sous l'axe longitudinal du véhicule. Toute dérive à droite ou à gauche entraîne une action compensatrice de la direction qui permet de remettre le véhicule exactement sur l'axe. De plus, le détecteur de fil d'Ariane 18 est pourvu d'une antenne adaptée permettant d'émettre des signaux radiofréquence qui ont pour effet de recevoir en retour les données de localisation mémorisées dans les dispositifs sans contact situés régulièrement sur le fil d'Ariane. Les capteurs de détection de la bande optique sont des capteurs de type CCD, placés sous le châssis du véhicule.

En cas de rupture ou de dégradation du guidage au sol, le véhicule, grâce à son système de référence, est capable de poursuivre sa trajectoire, d'anticiper la direction, jusqu'à retrouver la ligne de guidage grâce au repérage précis effectué par les dispositifs sans contact dans le sol sous le fil d'Ariane et capables de communiquer à distance grâce à des accéléromètres intégrés dans le véhicule qui permettent d'identifier précisément tous mouvement, et donc de se repérer en permanence même hors du fil d'Ariane en cas de dégradation de ce dernier, et en corrélation avec les autres informations de repérage. Si le fil n'est plus visible au bout de quelques mètres (éventuellement, en fonction de sa situation dans la cartographie) le véhicule s'arrête.

Pour le repérage géographique, Les dispositifs intégrés dans le fil d'Ariane permettent un repérage précis de la position du véhicule dans la ville. Chaque dispositif donne des informations permettant de lui attribuer les coordonnées géographiques de sa position.

L'ordinateur de bord du véhicule possède une base de donnée type cartographie, (régulièrement mise à jour par la centrale) lui permettant, grâce aux coordonnées lues dans chaque dispositif sans contact et ajustées par odomètre, de connaître en temps réel sa position précise (de l'ordre du cm). Ces données sont envoyées à l'ordinateur central qui gère le trafic, la répartition des véhicules et le cas échéant, les situations critiques.

De préférence, les dispositifs sans contact se trouvant dans le fil d'Ariane peuvent être lus jusqu'à un mètre. Ces dispositifs peuvent être des dispositifs RFID à faible coût, résistant aux intempéries et fonctionnant à la fréquence normalisée de 13.56 MHz.

Enfin, la sécurité est mise en oeuvre par la présence de capteurs 28 placés sur la périphérie de la voiture. Ces capteurs sont de 3 types: infrarouge, ultrasonique et hyperfréquence (radar). Ces capteurs permettent en temps réel de déterminer si la voie est libre ou non. L'information qu'ils envoient au centre de commande 26 est analysée et comparée en temps réel au système expert de référence se trouvant dans l'ordinateur de bord 24. Une situation critique entraîne l'arrêt momentané du véhicule. A tout instant, étant donné qu'il s'agit d'un véhicule évoluant dans un système et non d'un véhicule isolé, les informations de chaque véhicule sont transférées vers l'ordinateur central, et analysées de façon à exercer un suivi doublement sécurisé des véhicules. L'intelligence du véhicule est conçue pour interpréter toutes les situations possibles. Cependant, en cas de difficulté pour une prise de décision, le véhicule s'arrête et l'information et les images sont transférées vers l'ordinateur central 14 pour prise de décision par un opérateur.

Les capteurs par ultrasons de faible portée permettent de déterminer si une automobile approche du champ du véhicule ou si un objet obstrue la voie. Les capteurs arrière peuvent être gardés actifs et permettent ainsi le respect d'une distance de sécurité entre véhicules. Les zones avant et arrière nécessitent des capteurs de portée supérieure à celle des côtés. Lorsque le Module tourne, les capteurs se trouvant dans la direction à emprunter peuvent être privilégiés.

Les capteurs à infrarouge de portée limitée à quelques mètres permettent de déterminer si un piéton, un cyclomoteur, une bicyclette ou tout autre individu entre dans cette zone. Ces capteurs se trouvent sur tout le pourtour du véhicule car celui-ci a deux sens de déplacement.

Les capteurs hyperfréquence (radar) permettent de déterminer les échos sur une distance allant jusqu'à 200m. Ils permettent le freinage anticipé, la régulation de la vitesse ceci toujours en fonction de bases de données cartographiques. A noter que cette base de donnée intègre le code de la route en vigueur. De préférence, les feux de carrefours sont équipés de circuits destinés à informer les véhicules, tels que des dispositifs émissifs infrarouges dont la directivité est déterminée pour ne pas interférer sur les voies non concernées. Tous les panneaux de signalisations sont intégrés dans la base de donnée cartographie ce qui permet au véhicule d'être « attentif » aux endroits stratégiques (croisements, stops..). A défaut de bon fonctionnement des signaux de signalisation infrarouge, le véhicule qui a intégré le code de la route en vigueur respecte totalement ledit code. En cas de changement temporaire de la signalisation, le système expert prend la main, et l'ordinateur central peut informer le véhicule.

Tout véhicule de tête d'un train virtuel de plusieurs véhicules est désigné par son ordinateur de bord 24 comme véhicule maître. L'ordinateur de bord du véhicule maître assure alors l'orchestration des échanges de données entre les autres véhicules du train. A titre d'exemple, si le véhicule maître détecte un obstacle grâce aux détecteurs d'obstacle 28, nécessitant un ralentissement, voire un arrêt du train, l'électronique du véhicule maître transmet selon les différents vecteurs de communication les instructions d'activer le mode freinage progressif, freinage plus franc ou le freinage d'urgence. Ainsi, le train de véhicules va se déplacer selon les instructions du véhicule maître.

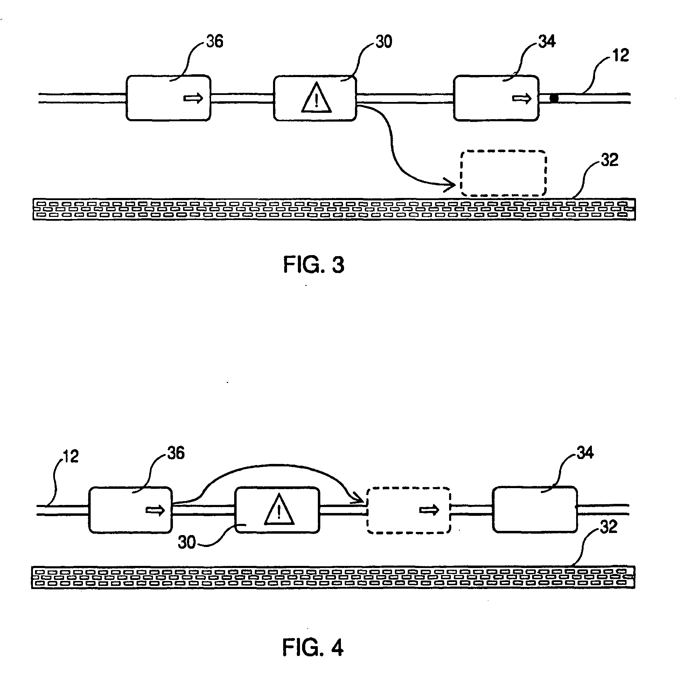

En outre, il peut se faire que la partie opérative d'un véhicule du train soit défaillante (batterie faible, panne du moteur). Dans ce cas comme illustré sur la figure 3, le véhicule défaillant quitte le fil d'Ariane 12 et le train de véhicules, et vient se placer le long du trottoir grâce à un moteur de secours ou simplement le démarreur tout en utilisant ses capteurs. A noter que le véhicule maître 34 commande le ralentissement des véhicules du train tel que le véhicule 36 qui suit le véhicule défaillant 30 pour que la manoeuvre puisse s'exécuter sans problème.

Comme illustré sur la figure 4, il peut se faire que le véhicule 30 soit totalement défaillant, dans l'impossibilité de se dégager, ou en cas de présence d'un obstacle permanent, le système expert du véhicule 36 qui suit le véhicule 30 déconnecte son guidage par le fil d'Ariane 12 et réalise la procédure de contournement du véhicule 30, afin de revenir sur le fil d'Ariane et ceci sous le contrôle du véhicule maître 34 qui dégage la place suffisante pour la manoeuvre. Cette manoeuvre se repète bien sûr pour les véhicules suivants.

A noter que, bien que les véhicules se déplacent de préférence par train de plusieurs véhicules, l'ordinateur de bord 24 de chaque véhicule permet au véhicule de se déplacer sur le fil d'Ariane de façon individuelle, en cas d'absence de train de véhicules se déplaçant dans la même direction.

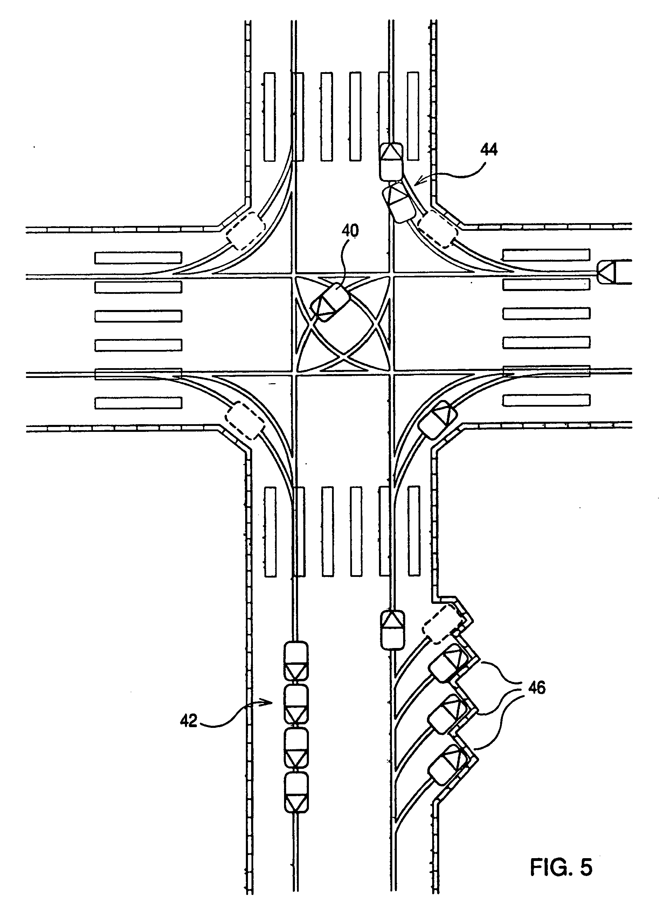

Pour obtenir un fonctionnement optimum du système selon l'invention, la ville devra être pourvue d'un ensemble de rails constituant le même fil d'Ariane de la manière la plus dense possible comme illustré sur la figure 5 montrant un réseau de bandes ou fils d'Ariane ainsi que des véhicules selon l'invention. Ainsi, on voit un véhicule 40 en train de changer de direction dans un échangeur, des trains de véhicules 42 ou 44, et des véhicules 46 en phase de rechargement

Lors de la constitution d'un train de véhicules, le véhicule maître mémorise la destination de chaque véhicule qui le suit et l'ensemble des points d'intersection des rails au cours desquels chaque véhicule aura à changer de direction.

Dans un même train, des véhicules sont amenés à prendre des directions différentes. Pour ce faire l'ordinateur de bord du véhicule de tête qui a mémorisé la destination de chaque véhicule ordonne en temps utile un léger ralentissement du train via les supports de transmission 22, ce qui permet au véhicule qui doit suivre un nouveau chemin de changer de direction en empruntant un fil d'Ariane différent.

Afin d'assurer un niveau de sécurité important, la distance entre véhicules est fonction de la vitesse. Quand celle-ci est relativement élevée (inférieure à 50km/h pour respecter la règlementation), les véhicules sont distants de quelques mètres. La distance entre les véhicules d'un même train est d'autant plus importante que la vitesse est élevée.

L'ensemble des véhicules est stationné sur des aires spécifiques qui sont commandées selon tout moyen connu (téléphone, Internet, bornes). L'utilisateur attend le véhicule réservé ou se dirige vers une aire de stationnement disposant de plusieurs véhicules puis s'identifie au moyen d'une carte d'abonnement à mémoire sans contact en la présentant devant la borne situé à l'extérieur du véhicule, prévue à cet effet. Il doit alors composer son code personnel ce qui a pour effet de déverrouiller le véhicule. L'utilisateur pénètre alors dans son véhicule et indique sa destination par différents moyens (annonce verbale, clavier, numéro de borne individuelle).

Le véhicule est alors intégré dans le prochain train de véhicules qui se dirige dans la direction souhaitée, l'ordinateur de bord du véhicule en attente rentrant en communication avec celui du véhicule de tête de train afin d'assurer les échanges de commandes utile permettant au véhicule en attente de démarrer, d'accélérer pour rejoindre la queue du train en marche. Cependant à défaut de train à proximité, s'orientant dans la même direction, le véhicule démarre et s'oriente vers l'objectif car il dispose de l'ensemble des moyens capables de le rendre autonome.

A noter que le système est conçu pour accepter le co-voiturage. A cet effet, lorsqu'un utilisateur initial programme un lieu de destination via une borne destinée à cet effet ou à un téléphone portable, cette donnée est transmise à l'ordinateur central, lequel décide si d'autres utilisateurs utilisant un trajet compatible, sont en attente d'un véhicule. Le véhicule va pouvoir s'arrêter pour prendre en charge d'autres passagers empruntant le même trajet. Le véhicule est pourvu de capteurs capables de lire à distance les cartes sans contact des occupants afin de gérer le coût des trajets.

Dans le mode manuel utilisé exceptionnellement, l'utilisateur conduit normalement le véhicule après pivotement du siège conducteur. Arrivé à destination, l'utilisateur quitte son véhicule, alors prêt pour une autre mission.

Le système nécessite deux types de stationnement, un stationnement dédié aux véhicules disponibles pour le roulage en mode automatique car présentant un niveau de charge des batteries convenable et un stationnement réservé aux véhicules dont la recharge des batteries est indispensable.

Le système est également conçu pour répondre au besoin intensif ponctuel. A titre d'exemple, l'ordinateur central sachant qu'à 23h, la sortie de cinéma s'effectue à tel endroit, il va ordonner le déplacement automatique des véhicules vides vers les aires où la demande est identifiée : le véhicule cherche l'utilisateur.

En conclusion, le système selon l'invention décrit ci-dessus va générer un nouvel art de vivre dans la cité, sans stress ni bruit et sans pollution. Il rendra les déplacements fluides et sans contrainte, avec une grande souplesse d'utilisation tout en respectant la liberté individuelle. Par son niveau élevé de rationalité, le système décrit est économiquement équilibré et rentable et présente une solution durable pour les décennies à venir.

## Revendications

1. Système de transport collectif automatisé comprenant au moins un véhicule (10) sans conducteur et un ordinateur central (14), ledit véhicule pouvant aller automatiquement d'un point de départ à un point d'arrivée au moyen de signaux de commande transmis par ledit ordinateur central et en suivant un rail (12) intégré à la chaussée sur laquelle se déplace ledit véhicule ;
ledit système étant **caractérisé en ce que** ledit véhicule est un véhicule automobile monté sur pneumatiques et ledit rail est une bande en caoutchouc ou équivalent fixée à la chaussée, ladite bande comportant une caractéristique optique continue et incorporant des dispositifs à puce sans contact (20) de type RFID ou transpondeurs à intervalles réguliers, et ledit véhicule comprenant des moyens de repérage et de détection (18) comportant une antenne adaptée pour émettre des signaux radiofréquence vers lesdits transpondeurs, lesdits moyens de repérage et de détection étant destinés à repérer ladite caractéristique optique pour suivre ladite bande pendant le déplacement du véhicule et à détecter des signaux de localisation reçus desdits transpondeurs en réponse auxdits signaux radiofréquence de manière à localiser ledit véhicule.

2. Système selon la revendication 1, dans lequel ledit véhicule (10) comprend un ordinateur de bord (24) pour recevoir les données liées à la conduite et les données liées à la gestion et à l'information transmises par ledit ordinateur central (14) par liaison radiofréquence numérique (16).

3. Système selon la revendication 2, dans lequel ledit ordinateur de bord du véhicule (24) possède une base de données de type cartographique, régulièrement mise à jour par ledit ordinateur centrale (14) lui permettant, grâce aux coordonnées transmises par lesdits transpondeurs (20) et ajustées par odomètre, de connaître en temps réel sa position précise.

4. Système selon la revendication 3, dans lequel le code de la route en vigueur et en tous les panneaux de signalisations sont intégrés dans ladite base de données de type cartographique, ce qui permet audit véhicule (10) d'être « attentif » aux endroits stratégiques (croisements, stops..).

5. Système selon la revendication 4, dans lequel ledit véhicule (10) comprend un centre de commande (26) adapté pour recevoir lesdites données liées à la conduite à partir dudit ordinateur de bord (24) et actionner les commandes dudit véhicule tels que les freins, l'accélérateur ou la direction

6. Système selon la revendication 5, dans lequel ledit véhicule (10) est pourvu sur sa périphérie de capteurs de détection d'obstacles (28)) adaptés pour déterminer en temps réel si la voie est libre ou non, lesdits capteurs transmettant les informations audit centre de commande (26) pour être analysées et comparées en temps réel à un système expert de référence se trouvant dans ledit ordinateur de bord (24) afin de ralentir ou de stopper ledit véhicule ou en cas de besoin.

7. Système selon la revendication 6, dans lequel lesdits capteurs de détection d'obstacles (28) sont de 3 types: infrarouge, ultrasonique et hyperfréquence.

8. Système selon l'une des revendications 1 à 7, comprenant une pluralité de véhicules identiques (10) formant un train de véhicules, le véhicule de tête étant le véhicule maître mémorisant la destination de chaque véhicule qui le suit et l'ensemble des points d'intersection des rails pour lesquels chaque véhicule aura à changer de direction.

9. Système selon la revendication 8, dans lequel les véhicules formant ledit train de véhicules communiquent entre eux au moyen de liaisons sans fil selon trois supports de communication, à savoir la liaison hyper fréquence numérique, la liaison radio analogique et la liaison par rayonnement infrarouge

10. Système selon la revendication 9, dans lequel la liaison infrarouge (22) de chacun desdits véhicules (10) est destinés à recevoir à partir dudit véhicule maître les instructions d'activer le mode freinage progressif ou le freinage d'urgence lorsque ledit véhicule maître est confronté à un obstacle.

11. Système selon la revendication 10, dans lequel un véhicule défaillant (30) peut quitter le rail (12) et le train de véhicules, et venir se placer le long du trottoir (32) grâce à un moteur de secours ou simplement le démarreur tout en utilisant ses capteurs, le véhicule maître (34) commandant le ralentissement des véhicules du train tel que le véhicule (36) qui suit ledit véhicule défaillant pour que la manoeuvre puisse s'exécuter sans problème.

12. Système selon la revendication 10, dans lequel lorsqu'un véhicule (30) est totalement défaillant, dans l'impossibilité de se dégager, ou en cas de présence d'un obstacle permanent, le véhicule (34) qui le suit déconnecte son guidage par le rail (12) et contourne ledit véhicule défaillant afin de revenir sur le rail et ceci sous le contrôle du véhicule maître (34) qui dégage la place suffisante pour la manoeuvre.

## Patentansprüche

1. Allgemeines, automatisiertes Transportsystem beinhaltet wenigstens ein Fahrzeug (10) ohne Fahrer und einen Zentralcomputer (14), das Fahrzeug kann mithilfe der Steuerungsbefehle des genannten Computers automatisch von einem Start- zu einem Zielpunkt gelangen sowie auf einer in die Fahrbahn integrierten Fahrschiene (12) folgen, auf welcher sich das genannte Fahrzeug fortbewegt;
das genannte System zeichnet sich durch eben dieses Fahrzeug aus, welches als ein automobiles Fahrzeug auf Reifen montiert ist und dessen Schiene ein Band aus Kautschuk oder ein Äquivalent ist, welches an die Fahrbahn fixiert ist, dieses Band enthält eine fortlaufende Spannung und schließt Druckeinrichtungen/Mikrochips ohne Kontakt (20) vom Typ RFID oder Transponder in regelmäßigen Intervallen mit ein, ebensolches Fahrzeug beinhaltet Mittel der Kennzeichnung und der Ortung (18) welche sich aus einer angepassten Antenne zusammensetzen, um Signale per Radiofrequenz zu den genannten Transpondoren auszusenden, ebensolche sind Mittel zur Markierung und Ortung, bestimmt, um die genannte charakteristische Optik ausfindig zu machen, um dem genanntem Band während der Bewegung des Fahrzeuges zu folgen und empfangene Ortungssignale der genannten Transpondoren als Antwort auf die genannten Radiofrequenzen zu übersetzen, um das genannte Fahrzeug zu verorten.

2. System nach der Inanspruchnahme 1, in welcher das genannte Fahrzeug (19) einen Bordcomputer enthält (24), um über eine digitale Funksequenz-Verbindung übertragene Informationen der mit der Steuerung verbundenen Daten und die Informationen, die durch den Zentralcomputer (14) vermittelt werden, mithilfe einer digitalen Radiofrequenz (16) zu empfangen.

3. System nach der Inanspruchnahme 2, in welcher der Bordcomputer des Fahrzeuges (24) eine Datengrundlage im Sinne einer Kartographie besitzt, welche regelmäßig durch den Zentralcomputer (14) aktualisiert wird und ihm erlaubt, mithilfe der genannten Transpondoren (20) vermittelten Koordinaten, über einen Schrittmesser adaptiert, in Echtzeit seine exakte Position zu bestimmen.

4. System nach der Inanspruchnahme 3, in welchem die Strassenbeschilderung in kraft tritt und in denen alle Straßenschilder integriert sind, in eben dieser Datenbasis auf der Grundlage einer Kartographie, welche dem genannten Fahrzeug (10) erlaubt, "wachsam" gegenüber Richtungswechseln zu sein (Kreuzungen, Stops, ....).

5. System nach Inanspruchnahme 4, in welcher das genannte Fahrzeug (10) eine Befehlszentrale enthält (26), angepasst, um genannte Steuerungsdaten durch den Bordcomputer (24) zu empfangen und die Befehle des genannten Fahrzeuges wie Bremsen, Beschleunigung oder einen Richtungswechsel auszuführen.

6. System nach der Inanspruchnahme 5, in welchem das Fahrzeug (10) bestimmt ist für eine Spannbreite von Sensoren zur Hinderniserkennung (28), angepasst, um in Echtzeit ermitteln können, ob die Straße frei ist oder nicht, eben diese Sensoren übermitteln die Informationen an die genannte Kommandozentrale (26) um analysiert und in Echtzeit mit einem Expertenreferenzsystem vergleichen zu werden, welches sich im ebensolchen Bordcomputer (24) befindet, um gegeben falls das Fahrzeug zu verlangsamen oder anzuhalten.

7. System nach der Inanspruchnahme 6, in welchen folgende 3 Typen von Hinderniserkennungs-Sensoren existieren: Infrarot, Ultraschall oder Hochfrequenz.

8. System nach der Inanspruchnahme 1 bis 7, beinhaltet eine Vielzahl von identischen Fahrzeugen (10) und bildet einen Zug von Fahrzeugen, das Fahrzeug am Kopf ist das Leitfahrzeug, welches die Richtung jedes Fahrzeuges, welches ihm folgt, abspeichert, ebenso wie die Gesamtheit der Straßenkreuzungspunkte für die jedes einzelne Fahrzeug die Richtung ändern wird.

9. System nach Inanspruchnahme 8, in welchem diejenigen Fahrzeuge, welche ebendiesen Zug bilden, mithilfe von Verbindungen ohne Draht unter sich kommunizieren, nach 3 Arten der Kommunikationsunterstützung: der Hochfrequenzverbindung, Funkverbindung und der Infrarotverbindung.

10. System nach der Inanspruchnahme 9, in welcher die Infrarotschnittstelle (22) in jedem der genannten Fahrzeuge (10) dafür bestimmt ist, Instruktionen des Leitfahrzeugs zur schrittweisen Aktivierung des Bremssystems oder zur Notfallbremsung empfangen zu können, sobald das Leitfahrzeug sich einem Hindernis gegenüber stehen sieht.

11. System nach der Inanspruchnahme 10, in welcher ein möglicherweise ausfallendes Fahrzeug (30) den Fahrzeugzug verlassen kann und dank eines Notfallmotors oder einfach durch den Anlasser, der seine Sensoren benutzt, am Wegesrand (32) zum Stillstand kommt, das Leitfahrzeug (34) befiehlt eine Verlangsamung der Fahrzeuge im Zug, sodass das dem ausfallenden Fahrzeug folgende Fahrzeug (36) nicht behindert wird und das Manöver ohne Probleme ausgeführt werden kann.

12. System nach Inanspruchnahme 10, in welchem, falls ein Fahrzeug einen Totalausfall hat und unfähig ist, sich loszukoppeln oder im Falle eines konstanten Hindernisses, das Fahrzeug, welches ihm folgt (34) den Leitzug verlässt und das genannte ausfallende Fahrzeug umfährt, um sich wieder an das Leitfahrzeug (34) anschließen zu können, welches den notwendigen Raum bereitstellt, damit das Manöver ausgeführt werden kann.

## Claims

1. Automated public and individual transport system including at least one vehicle (10) without driver and a central computer (14), the said vehicle being able to automatically go from a starting point to a destination point using the command signals transmitted by the said central computer and following a rail (12) which is integrated in the street pavement on which the said vehicle is moving;
the said system being **characterized by** the fact that the said vehicle is an automobile vehicle mounted on tyres and the said rail is a rubber strip or equivalent mounted on the pavement, the said strip exhibiting continuous optical characteristics and including contactless chip devices (20) of the RFID type or regularly spaced transponders and the said vehicle including localization and detection means (18) and including an antenna suited for transmission of radiofrequency signals to the said transponders, the said localization and detection systems being designed to identify the said optical characteristics in order to follow the said strip during the motion of the vehicle and to detect the localization signals received from the said transponders that are reacting to the said radiofrequency signals so as to localize the said vehicle.

2. System according to claim 1, where the said vehicle (10) includes an onboard computer (24) in order to receive the data related to the motion and the data related to the management and information transmitted by the said central computer (14) through a digital radiofrequency link (16).

3. System according to claim 2, where the said onboard computer of vehicle (24) is fitted with a database of the mapping type, regularly updated by the said central computer (14) that allows, thanks to the coordinates transmitted by the said transponders (20) and adjusted using an odometer, to know its accurate real time position.

4. System according to claim 3, where the present road signaling and all signaling panels are included in the said database of the mapping type, which allows the said vehicle (10) to be "aware" at the strategic points (intersections, stops..).

5. System according to claim 4, where the said vehicle (10) includes a command center (26) suited for reception of the said data linked to the motion from the said onboard computer (24) and to activate the commands of the said vehicle such as brakes, accelerator and steering

6. System according to claim 5, where the said vehicle (10) is equipped on the outer boundaries with obstacle detection sensors (28) suited for the real time assessment whether the way is free or not, the said sensors transmitting the information to the said command center (26) for analysis and real time comparison to a reference expert system included in the said onboard computer (24) in order to slow down or to stop the said vehicle or in case of emergency.

7. System according to claim 6, where the said obstacle detection sensors (28) are of 3 types: infrared, ultrasounds and hyper frequency.

8. System according to one of the claims 1 to 7, that include several identical vehicles (10) that constitute a train of vehicles, the front vehicle being the master vehicle that memorizes the destination of each vehicle that is following it and the full set of intersection points of the rails where each vehicle will have to change.

9. System according to claim 8, where the vehicles composing the said train of vehicles can communicate together thanks to wireless links using three communication means, i.e. the digital hyper frequency link, the analogue radio link and the infrared link.

10. System according to claim 9, where the infrared link (22) of the said vehicles (10) is suited for reception, from the master vehicle, of the instructions for activation of the progressive braking mode or of the emergency braking when the said master vehicle is facing an obstacle.

11. System according to claim 10, where a failing vehicle (30) may leave the rail (12) and the vehicle train, and come and park along the curb (32) thanks to an emergency engine or to the starter while using its sensors, the master vehicle (34) controlling the speed reduction of the vehicles of the train such as vehicle (36) that follows the said failing vehicle in order for the manoeuvre to be made without problem.

12. System according to claim 10, where when a vehicle (30) is facing a total breakdown, or is unable to get out of the way or in case of a permanent obstacle, the vehicle (34) that immediately follows disconnects its guidance from the rail (12) and goes around the failing vehicle in order to come back on the rail and this happening under the control of the master vehicle (34) that makes enough room for the manoeuvre.
